(19) Europäisches Patentamt
European Patent Office
Office européen des brevets

(11) **EP 1 092 127 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**15.09.2010 Patentblatt 2010/37**

(45) Hinweis auf die Patenterteilung:
**24.11.2004 Patentblatt 2004/48**

(21) Anmeldenummer: **99927713.0**

(22) Anmeldetag: **23.04.1999**

(51) Int Cl.:
**G01C 21/20** (2006.01)      **G08G 1/0968** (2006.01)

(86) Internationale Anmeldenummer:
**PCT/DE1999/001221**

(87) Internationale Veröffentlichungsnummer:
**WO 2000/002010 (13.01.2000 Gazette 2000/02)**

(54) **VERFAHREN ZUR BEEINFLUSSUNG VON QUELLDATEN ZUR BESTIMMUNG EINER ROUTE BEI EINEM NAVIGATIONSSYSTEM**

METHOD FOR INFLUENCING SOURCE DATA FOR DETERMINING A ROUTE IN A NAVIGATION SYSTEM

PROCEDE POUR INFLUENCER DES DONNEES SOURCE AFIN DE DETERMINER UN ITINERAIRE DANS UN SYSTEME DE NAVIGATION

(84) Benannte Vertragsstaaten:
**DE FR GB**

(30) Priorität: **02.07.1998 DE 19829538**

(43) Veröffentlichungstag der Anmeldung:
**18.04.2001 Patentblatt 2001/16**

(73) Patentinhaber: **ROBERT BOSCH GMBH**
**70442 Stuttgart (DE)**

(72) Erfinder:
• **MARTIN, Jan**
**D-31134 Hildesheim (DE)**
• **WALKLING, Uwe**
**D-31035 Barfelde (DE)**

(56) Entgegenhaltungen:
**EP-A- 0 702 210      EP-A- 0 702 210**
**EP-A- 0 703 436      EP-A- 0 782 120**
**EP-A- 0 782 120      WO-A-94/08250**
**DE-C- 3 810 179      DE-T- 69 009 058**

• **G.BECCARIA / A. BOLELLI: 'Modelling and assessment of dynamic route guidance: the MARGOT project. In Vehicle Navigation and Information Conference (VNIS'92)' 1992, OSLO, Seite 117-126**
• **GOTTFRIED TINHOFER: '"Methoden der angewandten Graphentheorie', 1976, SPRINGER-VERLAG, WIEN/NEW YORK**
• **C.W. DUIN/A. VOLGENANT: 'Some Generalizations of the Steiner Problem in Graphs', Bd. 17, 1987, NETWORKS Seite 353-364**
• **MARION LINEBERRY/CYNTHIA MARTIN: 'Route Planning and Scheduling in Dynamic Traffic Environments, Passenger Car Meeting and Exposition' SAE TECHNICAL PAPER SERIES 17 September 1990 - 20 September 1990, DEARBORN, MICHIGAN,**

**EP 1 092 127 B2**

**Beschreibung**

Technisches Gebiet

Die Erfindung betrifft ein Verfahren zur Beeinflussung von Quelldaten zur Bestimmung einer Route von einem vorbestimmten Startpunkt zu einem vorbestimmten Zielpunkt in einem Fortbewegungsmittel, insbesondere für ein Kraftfahrzeug, Flugzeug oder Schiff, auf der Basis einer digitalen Datenbasis, welche vorbestimmte Wegstrecken mit entsprechend zugeordneten Knotenpunkten, welche jeweilige Wegstrecken miteinander verbinden, umfasst, wobei den Wegstrecken jeweilige Gewichte zugeordnet sind, die in Abhängigkeit von externen Ereignissen verändert werden, und unter Berücksichtigung der Gewichte ein Routensuchalgorithmus eine Route bestimmt wird, gemäß Anspruch 1.

Stand der Technik

Navigationssysteme, wie beispielsweise auf der Basis von GPS (Global Positioning System), unterstützen einen Führer eines Fortbewegungsmittels bei der Navigation zu einem vorbestimmten Ziel. Hierbei bestimmt das Navigationssystem einen optimalen Weg bzw. eine optimale Route zumindest auf der Basis von Start- und Zielkoordinaten und einer entsprechenden digitalen Datenbasis, welche im wesentlichen ein Abbild des realen Straßennetzes ist. Bei autark ermittelten Routen eines Navigationssystems werden jedoch in bisherigen Navigationssystemen reale Verkehrsereignisse, wie beispielsweise Stau auf einem bestimmten Streckenabschnitt, nicht oder nur unzureichend berücksichtigt.

Aus EP-A-0 702 210 ist bereits bekannt, Wegstrecken Gewichtungen zuzuordnen, die der durchschnittlichen Fahrgeschwindigkeit auf eine jeweiligen Wegstrecke entsprechen. Dieser Wert ist veränderbar, wenn das Navigationssystem Daten empfängt, die die durchschnittliche Geschwindigkeit der Fahrzeuge auf dieser Wegstrecke angeben. Durch diese Maßnahme ist bereits eine weitgehende Möglichkeit gegeben, andere Wegstrecken zu berücksichtigen, wenn die Geschwindigkeit auf einer bestimmten Wegstrecke sehr klein ist.

Eine ähnliche Vorrichtung ist auch aus EP-A-703436 bekannt.

Darstellung der Erfindung, Aufgabe, Lösung, Vorteile

Es ist Aufgabe der vorliegenden Erfindung, ein verbessertes Verfahren der oben genannten Art zur Verfugung zu stellen, welches die Auswirkungen solcher Verkehrsereignisses im realen Verkehrsgeschehen in geeigneter Weise auf eine digitale Kartenbasis umsetzt.

Diese Aufgabe wird durch ein Verfahren der oben genannten Art mit den in Anspruch 1 genannten Merkmalen gelöst.

Dazu ist es erfindungsgemäß vorgesehen, dass in Abhängigkeit von externen Ereignissen nicht nur den Wegeabschnitten $k_i$, sondern auch den Knotenpunkten $n_i$ zugeordnete Gewichte $g_i$ verändert werden und bei der Routenbestimmung berücksichtigt werden.

Dies hat den Vorteil, dass die sich nach Beeinflussung der vorhandenen digitalen Kartenbasis ergebenden Alternativrouten, insbesondere bei der Ermittlung eines optimalen Weges durch einen Routensuchalgorithmus, das zugrunde liegende reale Verkehrsgeschehen besonders exakt berücksichtigen.

Vorzugsweise Weitergestaltungen der Vorrichtung sind in den Ansprüchen 2 bis 7 beschrieben.

Eine optimale Routenführung erzielt man dadurch, dass der Routensuchalgorithmus die Route derart bestimmt, dass die Summe der Gewichte $g_i$ minimiert wird.

In einer bevorzugten Ausführungsform des Verfahrens ist das Gewicht $g_i$ eine Weglänge $l_i$ einer jeweiligen Wegstrecke $k_i$, eine jeweilige Fahrzeit $t_{ki}$ einer jeweiligen Wegstrecke $k_i$ und/oder eine jeweilige Wartezeit $t_{ni}$ an einem jeweiligen Knotenpunkten $n_i$. Ein Knotenpunkt ist dabei beispielsweise eine Grenzübergang oder eine Mautstelle und die Wartezeit bezieht sich auf die jeweilige Abfertigungsdauer.

Zweckmäßigerweise liefert eine Datenquelle Daten zur Veränderung der Gewichte $g_i$, welche in einer Datensenke verarbeitet werden. Hierbei ist die Datenquelle beispielsweise ein Empfänger für Verkehrsmeldungen, eine Ereignisdatenbank und/oder eine Datenbank zur Abbildung der Verkehrsmeldungen auf die Datenbasis und die Datensenke beispielsweise eine Verkehrsmeldungsdaten verarbeitende Software in einem Navigationsrechner des Navigationssystems.

Für eine ereignisgerechte Änderung der Gewichte werden die externen Ereignisse von der Datenquelle und/oder der Datensenke für vorbestimmte Gewichtsveränderungen klassifiziert.

In einer bevorzugten Ausführungsform ist das Gewicht $g_i$ eine Fahrzeit $t_{ki}$ der Wegstrekke $k_i$, wobei sich ein geändertes Gewicht $t_{ki}^{neu}$ gemäß folgender Formel ergibt,

$$t_{k_i}^{\ new} = \frac{l_{k_i}}{V(k_i)} \cdot \frac{100}{\Delta V_C},$$

wobei $V(k_i)$ eine angenommene Geschwindigkeit für den Wegabschnitt $k_i$ und $\Delta V_C$ eine Änderung der Wegstreckengeschwindigkeit aufgrund eines externen Ereignisses ist.

In einer Ausführungsform ist das Gewicht $g_i$ eine Fahrzeit $t_{ki}$ der Wegstrecke $k_i$, wobei die Datenbasis hierarchisch aufgebaut ist und sich ein geändertes Gewicht $t_{ki}^{neu}$ gemäß folgender Formel ergibt,

$$t_{k_i}^{\ neu} = t_{k_i}^{\ neu(1)} + t_{k_i}^{\ neu(2)} =$$
$$= \left( \frac{l_{k_i}}{V(k_i)} \bullet \frac{100}{\Delta V_C} \bullet \frac{\Delta l_{Level_j}}{100} \right) + \left( \frac{l_{k_i}}{V(k_i)} \bullet \left( 1 - \frac{\Delta l_{Level_j}}{100} \right) \right),$$

wobei $V(k_i)$ eine angenommene Geschwindigkeit für den Weganschnitt $k_i$, $\Delta V_C$ eine Änderung der Wegstreckengeschwindigkeit aufgrund eines externen Ereignisses und $\Delta l_{Level_j}$ der Längenanteil in Prozent der Gesamtkantenlänge ist, welcher die anteilige Beeinflussung in einer Generalisierungsebene j der hierarchischen Datenbasis bezeichnet, ist.

Kurze Beschreibung der Zeichnungen

Nachstehend wird die Erfindung anhand der beigefügten Zeichnungen näher erläutert. Diese zeigen in

Fig. 1 eine schematische Darstellung einer digitalen Datenbasis zur Abbildung eines realen Straßennetzes,

Fig. 2 eine tabellarische Darstellung der Zuordnung von Wegstrecken bzw. Kanten und Wegstrecken- bzw. Kantengewichten der digitalen Datenbasis,

Fig. 3 eine beispielhafte Route für ein Kraftfahrzeug auf der Basis der digitalen Datenbasis, wobei jeweilige Fahrzeiten als Kantengewichte zugeordnet sind,

Fig. 4 eine schematische Darstellung eines hierarchischen Aufbaus einer digitalen Datenbasis,

Fig. 5 eine tabellarische Darstellung einer Klassifikation von Verkehrsereignissen,

Fig. 6 eine beispielhafte Route für ein Kraftfahrzeug auf der Basis der digitalen Datenbasis gemäß Fig 3, wobei die Gewichte verändert sind und

Fig. 7 eine schematische Darstellung der konsistenten Weitergabe von veränderten Gewichten von einer Generalisierungsebene in eine nächste bei hierarchischer Datenbasis.

Bester Weg zur Ausführung der Erfindung

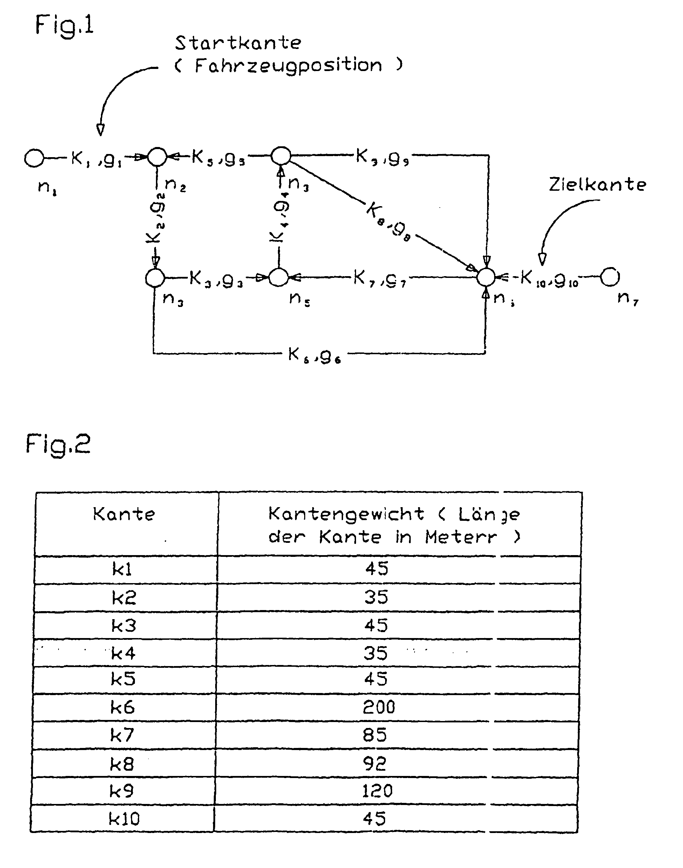

Zur Erläuterung der Funktionsweise des erfindungsgemäßen Verfahrens wird nachfolgend unter Bezugnahme auf die Fig. 1 bis 4 die Abbildung des realen Straßennetzes durch eine digitale Daten- bzw. Kartenbasis sowie deren Verwendung durch einen Routensuchalgorithmus näher erläutert.

Eine Abbildung des realen Straßennetzes durch eine digitale Kartenbasis hat beispielsweise die in Fig. 1 dargestellte Form. Das Straßennetz wird somit mathematisch vereinfacht durch einen bipartiten gerichteten Graphen dargestellt. In diesem werden Straßenzüge durch gerichtete Wegstrecken oder Netzkanten ($k_i$) symbolisiert. Netzknoten ($n_i$) beschreiben die Verknüpfungen von Straßenelementen (Kreuzungen, Autobahnanschlußstellen, etc.) untereinander. Mit diesen Eigenschaften ist es möglich, bzgl. eines solchen Netzes, Wegbeschreibungen zu generieren. Unter Bezug auf die Kantennamen sowie deren Richtung (Kantenvektor) wird ein Weg in Form einer Kantenliste ausgehend von einem definierten Startelement bis zu einem festgelegten Zielelement eindeutig beschrieben.

Ordnet man den Kanten im Netz bestimmte Attribute (Kantengewichte) zu, ist auf ein solches Netz ein algorithmisches Verfahren zur Bestimmung einer optimalen Route, ausgehend von einer aktuellen Fahrzeugposition (Startkante) zu einem gewünschten Ziel (Zielkante), anwendbar. Die den Kanten zugeordneten Gewichte sind dabei unterschiedlichster Art. Entscheidend für den Algorithmus ist, daß allen Kanten einer Datenbasis das vom Algorithmus verwendete Gewicht entnehmbar ist. Bekannte Verfahren, die diese Aufgabe lösen, sind hier optimierende Algorithmen, beispielsweise nach Ford oder Moore. Im einfachsten Fall kann man z.B. als Kantengewicht einer jeweiligen Kante deren eigene Länge zuordnen, wie in Fig. 2 tabellarisch dargestellt.

Anschließend wendet man auf ein solches Netz einen spezifischen Routensuchalgorithmus an, dessen Ziel es ist, eine Kantenauswahl zu bestimmen, so daß für die gefundene Auswahl gilt: "Die Summe aller beteiligten Kantengewichte ist die kleinste gegenüber allen anderen bestimmbaren Kantenauswahlen, die von der Startkante bis zur Zielkante führen." Somit ermittelt dieses Verfahren die kürzeste mögliche Verbindung zwischen Start- und Zielkante, welche für das Beispiel in Fig. 1 folgendermaßen lautet:

$$k1 \rightarrow -k5 \rightarrow k8 \rightarrow -k10$$

Hierbei geben die Vorzeichen die Fahrtrichtung bzgl. des vorgegebenen Kantenvektors an (positives Vorzeichen: in Vektorrichtung; negatives Vorzeichen: gegen Vektorrichtung).

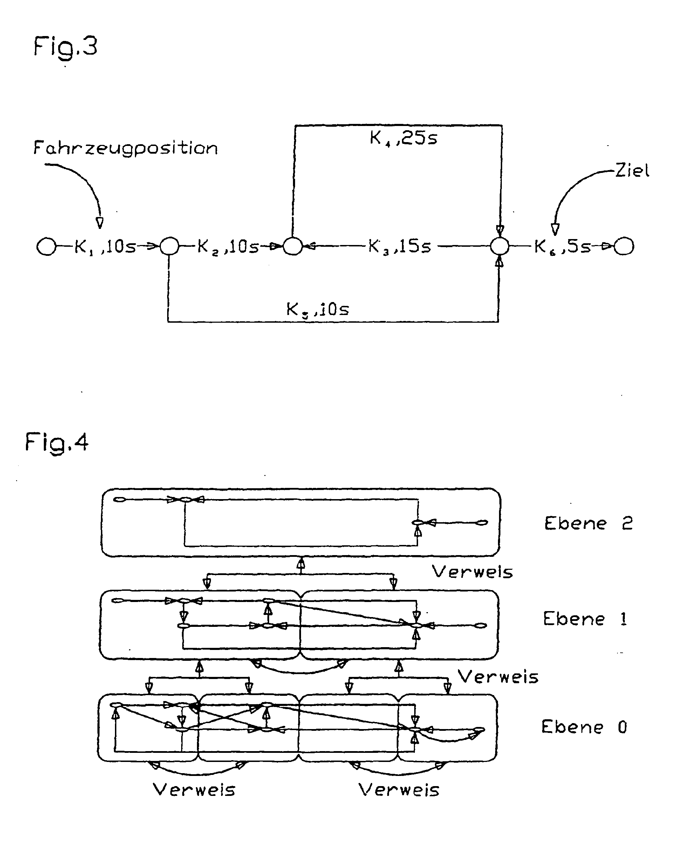

Zur Attributierung von Kanten sind als Gewichte auch andere Interpretationen möglich. Zur Bestimmung des optimalen Weges bzgl. der Fahrzeit kann man z.B. als Gewichte den Kanten Fahrzeiten zuordnen. Diese ergeben sich zum einen aus der entsprechenden Kantenlänge, und zum anderen aus einer angenommen Geschwindigkeit eines Fahrzeuges auf den Streckenelementen (Fig. 3). Der oben angewendete Routensuchalgorithmus würde für das Beispiel in Fig 3 die optimale Route $k_1 \rightarrow -k5 \rightarrow k6$ mit einer minimalen Gesamtfahrzeit von 25 Sekunden ermitteln.

Nachfolgend wird unter Bezugnahme auf Fig. 4 der Aufbau einer digitalen Karten- bzw. Datenbasis näher erfäutert. Der Gesamtumfang einer digitalen Datenbasis sowie die rechentechnisch begrenzte Leistungsfähigkeit von autarken Navigationssystemen führt i.A. dazu, daß eine solche Datenbasis (z.B. Deutschland) nicht in ihrem gesamten Umfang von einem Routensuchalgorithmus zu verwenden ist, sondern zweckmäßig in unterschiedliche Gebiete aufgeteilt wird. Eine Aufteilung kann dazu in mehrere Ebenen erfolgen, die das Straßennetz in unterschiedlichen Auflösungen beschreiben (Fig. 4). Jede Ebene wiederum besteht aus ein oder mehreren Teilgebieten. Eine wichtige Eigenschaft solcher Teifgebiete besteht darin, daß sie eine vorbestimmte Größenordnung in der Anzahl von Graphenelementen nicht überschreiten. Damit enthalten Ebenen höherer Auflösung des Straßennetzes entsprechend mehr Teilgebiete.

Man kann sich den Aufbau und die Verwendung einer hierarchischen digitalen Datenbasis ähnlich der Gestaltung einer Landkarte in Atlantenform vorstellen. Das von der Datenbasis abgedeckte Gebiet wird in der höchsten Auflösung auf einzelnen Seiten in Teilgebiete aufgeteilt. Verweise auf benachbarte Seiten stellen die Beziehungen zwischen den Seiten her. Einem Benutzer sowie einem algorithmischen Verfahren ist es I.A. jedoch nur möglich eine Seite bzw. eine begrenzte Anzahl von Seiten zur gleichen Zeit zu bearbeiten. Um Routen über größere Entfernungen zu bestimmen sind deshalb weitere generalisierte Darstellungen in Form von Übersichtskarten (generalisierte Ebenen einer digitalen Datenbasis) notwendig.

Das erfindungsgemäße Verfahren ermöglicht es, die Gewichtung einzelner Elemente des zuvor beschriebenen Graphen (sprich Datenbasis) in Abhängigkeit von Verkehrsereignissen geeignet zu verändern. Es ist hierbei unerheblich, ob die zu manipulierende Gewichtung als Kanten- und/oder als Knotengewichte in dem Graphen dargestellt wird. Im folgenden wird beispielhaft, aber die Erfindung nicht einschränkend, die Kantengewichtung beschrieben. Die Verarbeitung von Verkehrsereignissen führt beispielsweise zu einer Veränderung der Kantengewichte. Jede andere Einflußmöglichkeit, die sich auf die Kantengewichte abbilden läßt, ist ebenfalls mit diesem Verfahren verarbeitbar.

Alle notwendigen Daten zur konsistenten Gewichtsveränderung werden von wenigstens einer Datenquelle vollständig geliefert. Eine Datensenke verbindet die von der Datenquelle gelieferten Daten mit denen in der Datenbasis. Eine Datenquelle ist beispielsweise ein Empfänger für Verkehrsmeldungen, eine Ereignisdatenbank und/oder eine Datenbank zur Abbildung der Verkehrsmeldungen auf die Datenbasis, wobei das Verfahren zur Bestimmung der zu beeinflussenden Datenbasiselemente unabhängig von dem erfindungsgemäßen Verfahren ist. Die Datensenke ist beispielsweise eine Verkehrsmeldungsdaten verarbeitende Software in einem Navigationsrechner des Navigationssystems.

Zur Veränderung des Gewichts eines Graphenelements ist eine Vereinbarung über die Form der Gewichtsveränderung zwischen der Quelle der Gewichtsveränderung und der verarbeitenden Senke vorgesehen. Diese Vereinbarung ist beispielsweise eine Ereignisklassifizierung. In diesem Fall kennzeichnet der Empfänger die Verkehrsmeldung nach einer festgelegten Regel. In der Navigation werden den Kennzeichnungen definierte Gewichtsveränderungen zugeordnet. Das erfindungsgemäße Verfahren erlaubt jedoch auch die Möglichkeit, die Gewichtsveränderungen mit den Meldungen selbst zu definieren. in diesem Fall spezifiziert der Sender der Verkehrsmeldungen die Gewichtsveränderungen. In der Navigation sind dann keine Daten zur Gewichtsveränderung gespeichert.

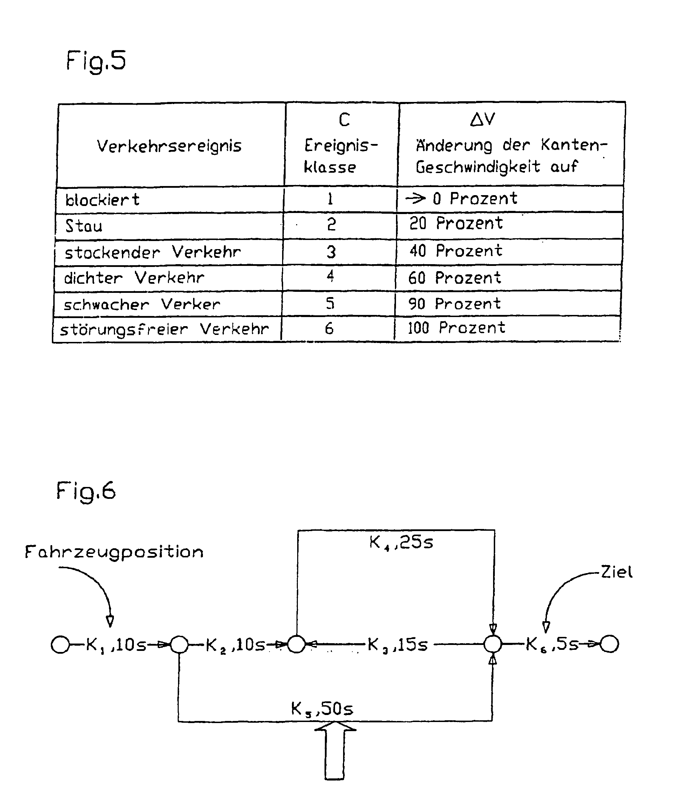

Zur Anwendung des Verfahrens erfolgt eine Einstufung aller relevanten Ereignisse in verschiedene Ereignisklassen. Dabei entspricht eine Ereignisklasse z.B. einer bestimmten Auswirkung auf die angenommene Geschwindigkeit, die jedem Kantenelement in der digitalen Kartenbasis zugeordnet ist, wie beispielhaft in Fig. 5 dargestellt.

Nachfolgend wird eine Berechnungsformel zur Gewichtung einer Kante mit Fahrzeit-Attributen als besonderes Ausführungsbeispiel näher beschrieben. Zur Bestimmung des optimalen Weges bzgl. der benötigten Fahrzeit zwischen einer Start- und einer Zielkante werden analog zu der in Fig. 2 dargestellten Zuordnung als Gewichte den Kanten jeweilige Fahrzeiten zugeordnet. Die Fahrzeit $t_{ki}$ einer Kante ergibt sich dabei aus der Kantenlänge $l_{ki}$ und der angenommenen Fahrgeschwindigkeit $V(k_i)$ für dieses Streckenelement zu:

$$t_{k_i} = \frac{l_{k_i}}{V(k_i)} \qquad\qquad\qquad (I)$$

Die Funktion $V(k_i)$ ordnet hierbei dem vorliegenden Kantenelement i in Abhängigkeit von spezifischen Kantenattributen (z.B. funktionale Straßenklasse, Landeszugehörigkeit, etc.) eine Geschwindigkeit zu.

Die Kantengewichtung wird dabei durch die Geschwindigkeit folgendermaßen beeinflußt. Ein klassifiziertes Verkehrsereignis beeinflußt ein Kantenelement $k_i$ durch lineare Veränderung dessen angenommener Geschwindigkeit $V(k_i)$:

$$t_{k_i}{}^{neu} = \frac{l_{k_i}}{V(k_i)} \bullet \frac{100}{\Delta V_C} \qquad\qquad\qquad (II)$$

Hierbei ist $\Delta V_C$ eine Geschwindigkeitsveränderung aufgrund des externen Ereignisses auf der Kante bzw. der Wegstrecke $k_i$. Damit erscheinen im vorliegenden Gesamtnetz alle anderen Kantenelemente gegenüber dem beeinflußten Element in ihrer "Attraktivität" für einen Routensuchalgorithmus verbessert. Wendet man diesen auf ein beeinflußtes Netz an, so werden die Kantenelemente anhand ihrer neuen Gewichtung ausgewertet und es ergibt sich bei geeignet starker Beeinflussung von einzelnen Elementen eine alternative Kantenfolge bzw. Ausweichroute bzw. Altemativroute gegenüber derjenigen, welche sich bei herkömmlichen Verfahren ergeben würde.

Ein Routensuchalgorithmus habe im Beispielnetz von Fig. 3 eine Kantenfolge k1 -> -k5 -> k6 mit einer Gesamtfahrzeit von 25 Sekunden als optimale Folge für den zeitlich kürzesten Weg bzgl. Start- und Zielkante ermittelt. Bei ausreichend starker Beeinflussung, beispielsweise Stau auf dem Kantenelement k5, verändert sich dessen Kantengewicht gemäß Fig. 5 von 10 Sekunden auf 50 Sekunden:

$$t_{k_5}{}^{neu} = \frac{l_{k_5}}{V(k_5)} \bullet \frac{1}{20\%} = 10s \bullet \frac{1}{20\%} = 50s \qquad\qquad\qquad (III)$$

Somit kommt es nach einer Neuberechnung des optimalen zeitlichen Weges zu einer alternativen Kantenfolge k1 -> -k2 -> -k3 -> k6 mit einer angenommenen Gesamtfahrzeit von 30 Sekunden, wie in Fig. 6 dargestellt.

Nachfolgend wird eine konsistente Kantengewichtsveränderung in einem hierarchischen Datenmodell näher erläutert. Das zuvor erläuterte Verfahren zur Beeinflussung von Kantengewichtungen bzgl. eines klassifizierten Verkehrsereignisses nimmt die Veränderung von Kantengewichtungen zunächst ausschließlich in einer festen Netzebene vor. Damit erfolgt diese Beeinflussung nur in einer einzigen Generalisierungstufe des Gesamtnetzes (vgl. Fig. 4 wo ein hierarchischer Aufbau einer digitalen Datenbasis dargestellt ist). Da es einem Algorithmus zur Routenermittlung möglich sein muß, Daten aus beliebigen Generalisierungsebenen zu verwenden, werden zweckmäßigerweise die durch eine externe Netzbeeinflussung veränderte Kantengewichtskonfiguration auch in allen anderen Ebenen verschiedener Generalisierung vorgenommen. Die in einer bestimmten Ebene vorgenommenen Änderungen sind dabei in allen anderen Ebenen gleichwertig bzw. konsistent.

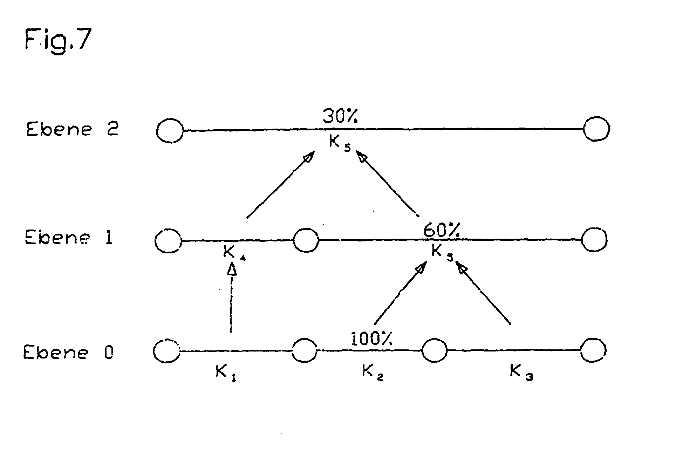

Fig. 7 veranschaulicht einen bestimmten Netzausschnitt in verschiedenen Generalisierungsebenen. Je höher dabei die Nummer der Generalisierungsebene ist, desto vergröberter ist die Netzauflösung in dieser Netzabbildung der digitalen Karten- bzw. Datenbasis. Die drei im Beispiel dargestellten Kantenelemente $k_1$, $k_2$ und $k_3$ der Ebene der niedrigsten Generalisierung werden dabei durch ein einzelnes Kantenelement $k_6$ in der höchsten Generalisierungsebene repräsentiert. Verursacht nun eine Abbildung eines klassifizierten Ereignisses (gemäß Formel (II)) für das Kantenelement

$k_2$ eine bestimmte Kantengewichtsveränderung, die das Element in dieser niedrigsten Generalisierungstufe zu 100 Prozent in seiner Länge belastet, so darf sich diese Beeinflussung in höheren Ebenen nur entsprechend der vorliegenden (durch die Generalisierung bedingten) Abbildungsvorschrift längenanteilig auswirken. Das Element $k_5$ in der nächst höheren Generalisierungsebene repräsentiert ja auch das unbeeinflußte Element $k_3$ der Ebene 0, so daß in Ebene 1 für die Veränderung der Kantengewichtung auch nur der für Kante $k_2$ korrespondierende Längenanteil in die Änderung mit eingehen darf.

Somit ist für zu beeinflussende Kantenelemente eine zusätzliche Attributierung erforderlich, die den betroffenen Längenanteil des jeweiligen Elementes abhängig von der vorliegenden Generalisierungsebene beschreibt. Die in Formel (II) beschriebene Vorschrift zur Kantengewichtsveränderung wird deshalb zweckmäßigerweise um einen entsprechenden Faktor erweitert:

$$t_{k_i}^{neu} = t_{k_i}^{neu(1)} + t_{k_i}^{neu(2)} =$$

$$= \left( \frac{l_{k_i}}{V(k_i)} \bullet \frac{100}{\Delta \dot{V}_C} \bullet \frac{\Delta l_{Level_j}}{100} \right) + \left( \frac{l_{k_i}}{V(k_i)} \bullet \left( 1 - \frac{\Delta l_{Level_j}}{100} \right) \right) \quad (IV)$$

wobei $\Delta l_{Level_j}$ der Längenanteil in Prozent der Gesamtkantenlänge ist, welcher die anteilige Beeinflussung in der Generalisierungsebene j bezeichnet.

Das erfindungsgemäße Verfahren stellt somit eine universelle Beeinflußbarkeit einer statisch vorgegebenen Kanten- und/oder Knotengewichtung in einer fest vorgegebenen digitalen Kartenbasis zur Verfügung. Da zu berücksichtigende Ereignisse mittels einer von der Datenbasis unabhängig festlegbaren Auswirkung (Ereignisklasse) auf diese einwirken, sind verschiedenste Beeinflussungen denkbar. Es können beispielsweise Verkehrsereignisse wie Stau oder zähfließender Verkehr zur Verschlechterung bestimmter Streckenabschnitte führen. Damit meidet dann ein autarkes Navigationssystem bei entsprechend schlechter Gewichtung einen solchen Abschnitt (z.B. Stau auf der Autobahn) und weist beispielsweise eine zeitlich günstigere Alternative aus, wenn eine Umfahrung beispielsweise über Bundesstraßenabschnitte möglich ist.

Weitere Möglichkeiten liegen beispielsweise darin, bestimmte Streckenabschnitte im vorgegebenen Netz, die einer bestimmten Attributierung entsprechen, vollständig zu sperren. Für Fahrzeuge wie z.B. Schwertransporter könnte ein solches dynamisches Navigationssystem Streckenabschnitte, für die ein zu geringes maximales Fahrgewicht gilt, selbständig sperren. Mit einer entsprechend schlechten Kantengewichtung wirken diese Abschnitte für einen Routensuchalgorithmus wie unpassierbar und werden damit bzgl. der generierten Fahrempfehlungen entsprechend umfahren.

Andererseits sind auch Verbesserungen der Kantengewichtungen im Netz denkbar, um beispielsweise bestimmte Routen vorzuprägen und um somit in geeigneter Weise auf die vom System vorgeschlagene Routen Einfluß zu nehmen.

Das Verfahren stellt die konsistente Abbildung von Beeinflussungen in einem hierarchischen Datenmodell sicher. Bisherige grundlegende Algorithmen z.B. für Routensuche und Zielführung, müssen hierzu nicht angepaßt werden, da für diese eine äußere Beeinflussung, nicht erkennbar ist.

**Patentansprüche**

1. Verfahren zur Beeinflussung von Quelldaten zur Bestimmung einer Route von einem vorbestimmten Startpunkt zu einem vorbestimmten Zielpunkt für ein Fortbewegungsmittel auf der Basis einer digitalen Datenbasis, welche vorbestimmte Wegstrecken ($k_i$) mit entsprechend zugeordneten Knotenpunkten ($n_i$), welche jeweilige Wegstrecke ($k_i$) miteinander verbinden, umfasst, wobei den Wegstrecken ($k_i$) jeweilige Gewichte ($g_i$) zugeordnet sind, die in Abhängigkeit von externen Ereignissen verändert werden, und unter Berücksichtigung der Gewichte ($g_i$) ein Routensuchalgorithmus eine Route bestimmt, wobei den Knotenpunkten ($n_i$) ebenfalls Gewichte ($g_i$) zugeordnet sind, die in Abhängigkeit von externen Ereignissen verändert werden und bei der Routenbestimmung berücksichtigt werden, wobei die Gewichte ($g_i$) einzelner Knotenpunkte ($n_i$) oder sowohl Knotenpunkte ($n_i$) als auch Wegstrecken ($k_i$) in Abhängigkeit von Verkehrsereignissen als externen Ereignissen veränderbar sind,

wobei die Datenbasis hierarchisch mit mehreren Generalisierungsebenen aufgebaut ist und bei Änderung eines Gewichts eines Wegeabschnitts in einer bestimmten Generalisierungsebene in der dieser gegenüber übergeordneten Generalisierungsebene das Gewicht desjenigen Wegeabschnitts, welcher den von der Gewichtsänderung betroffenen Wegeabschnitt der bestimmten Generalisierungsebene enthält, angekehrt proportional dem Längenanteil des von der Gewichtsänderung betroffenen Wegeabschnitts an dem übergeordneten Wegeabschnitt der übergeordneten Generalisierungsebene verändert wird.

2. Verfahren nach Anspruch 1, **dadurch gekennzeichnet, dass** der Routensuchalgorithmus die Route derart bestimmt, dass die Summe der Gewichte ($g_i$) minimiert wird.

3. Verfahren nach einem der vorhergehenden Ansprüche, **dadurch gekennzeichnet, dass** das Gewicht ($g_i$) bei einem Knoten eine jeweilige Wartezeit ($t_{ni}$) an einem jeweiligen Knotenpunkt ($n_i$) ist.

4. Verfahren nach einem der vorhergehenden Ansprüche, **dadurch gekennzeichnet, dass** eine Datenquelle Daten zur Veränderung der Gewichte ($g_i$) liefert, welche in einer Datensenke verarbeitet werden.

5. Verfahren nach Anspruch 4, **dadurch gekennzeichnet, dass** die Datenquelle ein Empfänger für Verkehrsmeldungen, eine Ereignisdatenbank und/oder eine Datenbank zur Abbildung der Verkehrsmeldungen auf die Datenbasis ist.

6. Verfahren nach Anspruch 3 oder 4, **dadurch gekennzeichnet, dass** die Datensenke eine Verkehrsmeldungsdaten verarbeitende Software in einem Navigationsrechner des Navigationssystems ist.

7. Verfahren nach einem der Ansprüche 4 bis 6, **dadurch gekennzeichnet, dass** die externen Ereignisse von der Datenquelle und/oder der Datensenke für vorbestimmte Gewichtsveränderungen klassifiziert werden.


**Claims**

1. Method for influencing source data for determining a route from a predetermined starting point to a predetermined destination for a means of locomotion on the basis of a digital database which comprises predetermined route elements ($k_i$) with correspondingly assigned nodes ($n_i$) which connect respective route elements ($k_i$) to one another, the route elements ($k_i$) being assigned respective weightings ($g_i$) which are changed as a function of external events and a route search algorithm determining a route taking into account the weightings ($g_i$), the nodes ($n_i$) also being assigned weightings ($g_i$) which are changed as a function of external events and are taken into account in the determination of routes,
the weightings ($g_i$) of individual nodes ($n_i$) or both nodes ($n_i$) and of routes ($k_j$) being capable of being changed as a function of traffic events as external events,
the database being of hierarchical design with a plurality of generalization levels, and in the event of a change of a weighting in a route section in a specific generalization level the weighting of that route section which contains that route section of the specific generalization level which is affected by the change in weighting in the generalization level which is superordinate to said specific generalization level being changed proportionally to the length component of that route section on the superordinate route section of the superordinate generalization level which is affected by the change in weighting.

2. Method according to Claim 1, **characterized in that** the route search algorithm determines the route in such a way that the sum of the weightings ($g_i$) is minimized.

3. Method according to one of the preceding claims, **characterized in that** the weighting ($g_i$) at a node is a respective waiting time ($t_{ni}$) at a respective node ($n_i$).

4. Method according to one of the preceding claims, **characterized in that** a data source supplies data for changing the weightings ($g_i$) which are processed in a data sink.

5. Method according to Claim 4, **characterized in that** the data source is a receiver for traffic messages, an event database and/or a database for mapping the traffic messages onto the database.

6. Method according to Claim 3 or 4, **characterized in that** the data sink is a piece of software which processes traffic message data in a navigation computer of the navigation system.

7. Method according to one of Claims 4 to 6, **characterized in that** the external events are classified by the data source and/or the data sink for predetermined changes in weighting.

**Revendications**

1. Procédé pour agir sur les données de source en vue de déterminer un itinéraire entre un point de départ prédéterminé et un point de destination prédéterminé pour un moyen de déplacement, sur base d'une base de données numériques qui comporte des sections prédéterminées de parcours ($k_i$) auxquelles sont associés de points de noeud ($n_i$) qui relient les unes aux autres les différentes sections de parcours ($k_i$),

   des pondérations respectives ($g_i$) étant associées aux sections de parcours ($k_i$) et étant modifiées en fonction d'événements extérieurs,

   un algorithme de recherche d'itinéraires déterminant un itinéraire en tenant compte des pondérations ($g_i$),

   des pondérations ($g_i$) étant également associées aux points de noeud ($n_i$), étant modifiées en fonction d'événements externes et étant prises en compte dans la détermination de l'itinéraire,

   les pondérations ($g_i$) des différents points de noeud ($n_i$) et tant des points de noeud ($n_i$) que des sections de parcours ($k_i$) pouvant être modifiées en fonction d'événements de circulation qui constituent les événements externes,

   la base de données ayant une structure hiérarchique dotée de plusieurs plans de généralisation, la pondération de la partie du parcours qui contient la partie de parcours du plan de généralisation défini concernée par la modification de pondération étant modifiée de manière inversement proportionnelle à la proportion de longueur de la partie de parcours concernée par la modification de pondération sur la partie de parcours d'ordre supérieur du plan de généralisation d'ordre supérieur, lors d'une modification de la pondération d'une partie de parcours dans un plan de généralisation défini, dans le plan de généralisation d'ordre supérieur à celui de ce plan de généralisation.

2. Procédé selon la revendication 1, **caractérisé en ce que** l'algorithme de recherche d'itinéraire détermine l'itinéraire en minimisant la somme des pondérations ($g_i$).

3. Procédé selon l'une des revendications précédentes, **caractérisé en ce que** la pondération ($g_i$) pour chaque noeud est un temps d'attente ($t_{ni}$) en chaque point de noeud ($n_i$).

4. Procédé selon l'une des revendications précédentes, **caractérisé en ce qu'**une source de données délivre des données de modification des pondérations ($g_i$) qui sont traitées dans un drain de données.

5. Procédé selon la revendication 4, **caractérisé en ce que** la source de données est un récepteur de messages concernant le trafic, une base de données d'événements et/ou une base de données qui donne une image des messages concernant le trafic dans la base de données.

6. Procédé selon les revendications 3 ou 4, **caractérisé en ce que** le drain de données est un logiciel qui traite des données de messages concernant le trafic dans le calculateur de navigation du système de navigation.

7. Procédé selon l'une des revendications 4 à 6, **caractérisé en ce que** les événements externes sont classés par la source de données et/ou le drain de données en vue de modifications prédéfinies de la pondération.

## Fig.1

Startkante
( Fahrzeugposition )

Zielkante

## Fig.2

| Kante | Kantengewicht ( Länge der Kante in Meterr ) |
|-------|---------------------------------------------|
| k1 | 45 |
| k2 | 35 |
| k3 | 45 |
| k4 | 35 |
| k5 | 45 |
| k6 | 200 |
| k7 | 85 |
| k8 | 92 |
| k9 | 120 |
| k10 | 45 |

Fig.3

Fahrzeugposition

$K_4$,25s

Ziel

$K_1$,10s    $K_2$,10s    $K_3$,15s    $K_6$,5s

$K_5$,10s

Fig.4

Ebene 2

Verweis

Ebene 1

Verweis

Ebene 0

Verweis          Verweis

## Fig.5

| Verkehrsereignis | C Ereignis-klasse | ΔV Änderung der Kanten-Geschwindigkeit auf |
|---|---|---|
| blockiert | 1 | → 0 Prozent |
| Stau | 2 | 20 Prozent |
| stockender Verkehr | 3 | 40 Prozent |
| dichter Verkehr | 4 | 60 Prozent |
| schwacher Verker | 5 | 90 Prozent |
| störungsfreier Verkehr | 6 | 100 Prozent |

## Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0702210 A

- EP 703436 A